# EUROPÄISCHE PATENTSCHRIFT

(11) **EP 1 419 688 B1**
(45) Veröffentlichungstag und Bekanntmachung des Hinweises auf die Patenterteilung: **20.09.2006**
(21) Anmeldenummer: 03025592.1
(22) Anmeldetag: 08.11.2003
(51) Int. Cl.: A01D 43/08, A01F 29/10

(54) **Erntegerät zum Ernten von Mais oder dgl. stengelartigem Erntegut**
Harvesting device for maize or similar stalk crop
Récolteuse de mais ou produits similaires a tige

(30) Priorität: 15.11.2002 DE 20217681 U
(43) Veröffentlichungstag der Anmeldung: 19.05.2004
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Horstmann, Josef, Dr.-Ing., 49479 Ibbenbüren (DE)

(56) Entgegenhaltungen:
- EP-A- 0 993 766
- DE-A- 4 218 235
- DE-A- 10 037 534
- DE-A- 19 918 552
- US-A1- 2001 054 278

## Beschreibung

Die Erfindung betrifft ein landwirtschaftliches Erntegerät zum Ernten von Mais oder dgl. stengelartigem Erntegut nach dem Oberbegriff des Anspruchs 1.

Ein derartiges Erntegerät ist für sich bekannt und insbesondere als Vorsatzgerät für eine mobile Verarbeitungseinrichtung in der Art eines Häckslers ausgebildet. Für die Maisernte besteht das Erntegerät aus zumindest einer Einzugs- und Fördereinrichtung, welche das stengelartige Erntegut in aufrechter Stellung erfasst, mäht und dann anschließend in Richtung zu einer Verarbeitungseinrichtung fördert, die im wesentlichen aus einer Presseinrichtung, einer nachfolgende Häckseleinrichtung mit sich daran anschließender Auswurfeinrichtung zur Übergabe des gehäckselten Erntegutes an ein neben oder hinter dem Häcksler fahrendes Sammelfahrzeug gebildet ist. Die Einzugs- und Fördereinrichtung besteht dabei aus einem umlaufend angetriebenen Endlosförderer, welcher mit auswärts weisenden Förder- und Führungselementen wie Zinken oder dgl. zur Aufnahme, zum Abschneiden und zur Förderung des stengelartigen Erntegutes bestückt ist. Diesen auswärts weisenden Förder- und Führungselementen haftet der Mangel an, dass sich insbesondere Maisblätter oder dgl. Pflanzenteile an den Förder- und Führungselementen aufhängen und somit mit dem umlaufenden Endlosförderer mitgeführt werden. Eine Umkehr der Antriebsdrehrichtung des Endlosförderers während eines begrenzten Zeitintervalls schafft hier zwar Abhilfe, stellt jedoch für den bereits mit vielen Aufgaben hochbeanspruchten Bediener der Erntemaschine eine zusätzliche Tätigkeit dar.

Aufgabe der Erfindung ist es daher, ein Erntegerät der vorstehend angegebenen Art bereitzustellen, bei dem, die Aufmerksamkeit des Bedieners in Anspruch nehmende Positionierungsund Bedienungstätigkeiten vereinfacht sind.

Zur Lösung der gestellten Aufgabe zeichnet sich das Erntegerät der vorstehend genannten Art durch die im Anspruch 1 angegebenen Merkmale aus. Hinsichtlich der weiteren Ausgestaltung der Erfindung wird auf die Ansprüche 2 bis 8 verwiesen.

Bei einem gemäß der Erfindung gestalteten Erntegerät ist es zur Entlastung des Bedieners von immer wieder kehrenden Positionierungs- und Bedienungstätigkeiten im Ernteeinsatz vorgesehen, dass die Antriebseinrichtung einer als Endlosförderer ausgebildeten Einzugs- und Fördereinrichtung und dabei insbesondere eine Steuerung der Antriebseinrichtung derartig mit einer Steuer- und Schaltvorrichtung einer in der Art eines Häckslers ausgebildeten Verarbeitungseinrichtung für stengelartiges Erntegut, wie beispielsweise Mais gekoppelt ist, dass mit dem Befehl zur Überführung des Vorsatzgerätes aus einer bodennahen Arbeits- und Betriebsstellung in eine zumindest teilweise angehobene Vorgewendestellung zwangsgesteuert eine Umkehr der Antriebsbewegung der Einzugs- und Fördereinrichtung eingeleitet wird. In der Vorgewendestellung ist das Vorsatzgerät soweit angehoben, dass bei Fahrten auf dem Vorgewende infolge von Bodenunebenheiten oder beim Durchfahren von Fahrspurrillen eine Bodenberührung durch das Vorsatzgerät sicher ausgeschlossen ist. Die zwangsgesteuerte Umkehr der Antriebsbewegung bedeutet dabei, dass am Ende eines zu bearbeitenden Feldstreifens bei dem vom Bediener eingeleiteten Anheben des Vorsatzgerätes aus der bodennahen Arbeits- und Betriebsstellung in die zumindest teilweise angehobene Vorgewendestellung ohne eine weitere Einwirkung des Bedieners eine Umkehr der Antriebsbewegung der Einzugs- und Fördereinrichtung mit dem Ziel einer Reinigung der auswärts weisenden Förderund Führungselemente der Einzugs- und Fördereinrichtung von beispielsweise Maisblättern oder dgl. Pflanzenteilen erfolgt. Diese Maisblätter oder dgl. Pflanzenteile hängen sich beim Ernteeinsatz an den Förder- und Führungselementen der Einzugs- und Fördereinrichtung auf, welche sich in einer auf die Verarbeitungseinrichtung zulaufenden Antriebsbewegung befinden, so dass durch eine Antriebsbewegung in entgegengesetzter Richtung eine Reinigungswirkung der Förder- und Führungselemente dadurch erreichbar ist, dass die Förder- und Führungselemente der Einzugs- und Fördereinrichtung an feststehenden Abschnitten, wie beispielsweise den unterhalb von der Einzugs- und Fördereinrichtung angeordneten Schneidmessern entlang geführt werden und somit die Maisblätter oder dgl. Pflanzenteile von den Förderund Führungselementen abgestreift werden.

Gemäß einem vorteilhaften Aspekt der Erfindung kann es aber auch vorgesehen sein, dass die Umkehr der Antriebsbewegung der Einzugs- und Fördereinrichtung erst nach Ablauf eines Zeitintervalls zwangsgesteuert erfolgt, nachdem die Überführung des Vorsatzgerätes aus der bodennahen Arbeits- und Betriebsstellung in eine zumindest teilweise angehobene Vorgewendestellung eingeleitet worden ist. Dieses Zeitintervall zwischen dem Beginn des Anhebens des Vorsatzgerätes und der Einleitung der Umkehr der Antriebsbewegung ist in seiner Länge individuell festlegbar und dient dazu, dass der Bediener der mobilen Verarbeitungseinrichtung am Ende eines bearbeiteten Feldstreifens nicht so lange warten muss, bis beispielsweise auch die letzte Maispflanze vom äußeren Rand des Vorsatzgerätes bis zur Mitte geführt und dort in die Verarbeitungseinrichtung eingezogen worden ist. Der Bediener kann vielmehr stets weiterfahren, wobei nach Ablauf des Zeitintervalls zwangsgesteuert die Umkehr der Antriebsbewegung der Einzugs- und Fördereinrichtung eingeleitet wird.

Vorteilhafte Ausführungsformen der Erfindung können davon ausgehen, dass die Koppelung zwischen der Antriebseinrichtung der Einzugs- und Fördereinrichtung und einer Steuer- und Schaltvorrichtung der Verarbeitungsmaschine über mechanische, elektrische, hydraulische oder pneumatische Schaltelemente erfolgt. Es ist aber auch ohne weiteres denkbar, dass bei der Auswahl der Schaltelemente Kombinationen aus mechanisch/elektrisch oder hydraulisch/elektrisch oder pneumatisch/elektrisch ausgeführten Ausführungen bevorzugt werden. Weiterhin ist in diesem Zusammenhang auch ein Einsatz von Bordcomputern vorstellbar, so dass die Koppelung der Antriebseinrichtung der Einzugs- und Fördereinrichtung mit der Steuer- und Schaltvorrichtung der Verarbeitungsmaschine über eine Verknüpfung von Programmabläufen (Software) erreicht wird.

Ein weiterer vorteilhafter Aspekt ergibt sich dadurch, dass die Zeit ebenfalls frei wählbar ist, in der die Einzugs- und Fördereinrichtung mit einer, der beim Ernten vorherrschenden Antriebsbewegung entgegengesetzten Richtung angetrieben wird. Dadurch erhält der Bediener eine Möglichkeit, die bei der Umkehr der Antriebsbewegung der Einzugs- und Fördereinrichtung eintretende Reinigungswirkung dem Verschmutzungsgrad anzupassen.

In einer vorteilhaften Weiterbildung der Erfindung ist es weiterhin vorstellbar, dass nach dem Ablauf der Zeitdauer, in der die Einzugs- und Fördereinrichtung mit, der beim Ernten vorherrschenden Antriebsbewegung entgegengesetzten Richtung angetrieben worden ist, zwangsgesteuert eine Antriebsbewegung der Einzugs- und Fördereinrichtung in die beim Ernten vorherrschende Richtung wiederherstellbar ist. Dies kann je nach Größe des Vorgewendes so geschehen, dass die Einzugs- und Fördereinrichtung entweder mit einer reduzierten oder auch mit der beim Ernten notwendigen Umlaufgeschwindigkeit angetrieben wird.

Eine detaillierte Beschreibung des Gegenstandes der Erfindung erfolgt nun anhand eines Ausführungsbeispieles. In der Zeichnung stellt im einzelnen dar:
- Fig. 1: eine perspektivische Ansicht eines vorderen Teiles einer erfindungsgemäßen, in der Art eines Häckslers ausgebildeten, mobilen Verarbeitungseinrichtung;
- Fig.2: eine teilweise abgebrochen dargestellte, perspektivischen Ansicht eines Teiles eines Vorsatzgerätes;

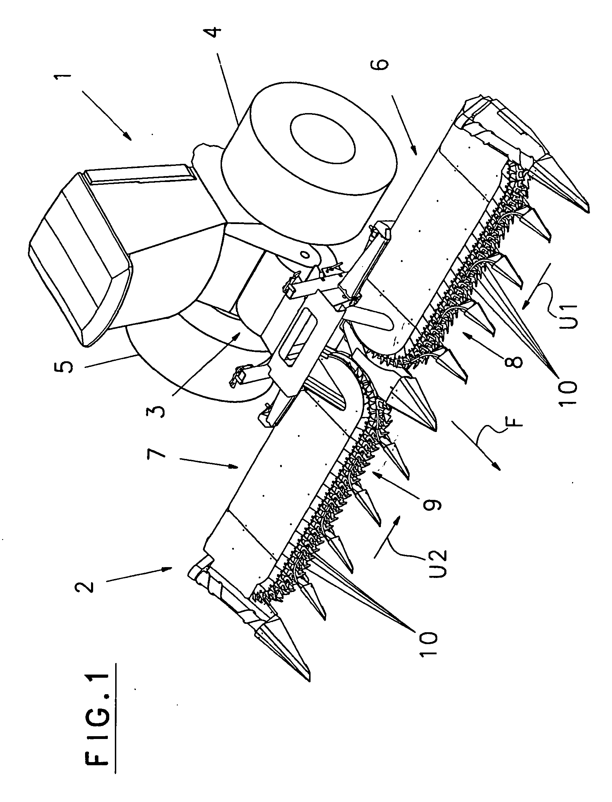

Eine nach den Merkmalen der Erfindung gestaltete, mobile Verarbeitungseinrichtung 1 zum Ernten von stengelartigem Erntegut wie Mais in der Art eines Häckslers ist in Fig.1 teilweise wiedergegeben und umfasst im wesentlichen, ein als Vorsatzgerät 2 ausgebildetes Erntegerät, welches einer Vorpreß- und Häckseleinheit 3 zum Vorpressen und Häckseln des stengelartigen Erntegutes vorgeordnet ist. Über Räder 4,5 stützt sich der dargestellte vordere Abschnitt der Verarbeitungseinrichtung 1 gegenüber dem Erdboden ab. Vorzugsweise handelt es sich bei der Verarbeitungseinrichtung 1 um eine selbstfahrende Arbeitsmaschine, welche von einem nicht dargestellten Antriebsmotor während des Einsatzes auf dem Feld oder während der Fahrt auf der Straße angetrieben wird. Das Vorsatzgerät 2 setzt sich aus zwei Abschnitten 6,7 zusammen, welche eine als umlaufender Endlosförderer ausgebildete Einzugs- und Fördereinrichtung 8,9 aufweisen. Die Einzugs- und Fördereinrichtungen 8,9 sind mit auswärts weisenden Förder- und Führungselementen 10 versehen und erfassen bei der in Richtung U1,U2 weisenden Antriebsbewegung den Mais oder dgl. stengelartiges Erntegut in aufrechter Stellung, mähen ihn ab und fördern ihn in Richtung zur Vorpreß- und Häckseleinheit 3.

In der in Fig.1 wiedergegebenen Darstellung befindet sich das Vorsatzgerät 2 in einer bodennahen Arbeits- und Betriebsstellung, welche zum Ernten des stengelartigen Erntegutes vorgesehen ist. In dieser Arbeits- und Betriebsstellung wird die mit den auswärts weisenden Förderund Führungselementen 10 bestückte Einzugs- und Fördereinrichtung 8,9 in Richtung U1,U2 angetrieben, während die Verarbeitungseinrichtung 1 sich in Fahrt- und Arbeitsrichtung F über das Feld bewegt. Erreicht die Verarbeitungseinrichtung 1 nun das Ende eines bearbeiteten Feldstreifens, so wird nun gemäß der Erfindung mit dem Befehl zum Überführen des Vorsatzgerätes 2 aus der bodennahen Arbeits- und Betriebsstellung in eine zumindest teilweise angehobene Vorgewendestellung zwangsgesteuert eine Umkehr der Antriebsbewegung der Einzugs- und Fördereinrichtung 8,9, also entgegen der Pfeilrichtung U1,U2 eingeleitet. Diese Umkehr der Antriebsbewegung dient der Reinigung der Förder- und Führungselemente 10 der Einzugs- und Fördereinrichtung 8,9 von Maisblättern oder dgl. Pflanzenteile und kann dabei unmittelbar zeitgleich mit dem Beginn des Anhebens des Vorsatzgerätes 2 oder nach Ablauf eines Zeitintervalls Δt zwischen dem Beginn des Anhebens des Vorsatzgerätes 2 und der Einleitung der Umkehr der Antriebsbewegung der Einzugs- und Fördereinrichtung 8,9 erfolgen. Dieses Zeitintervall Δt zwischen dem Beginn der Anhebens des Vorsatzgerätes 2 und der Einleitung der Umkehr der Antriebsbewegung ist in seiner Länge frei wählbar und dient dazu, dass der Bediener der mobilen Verarbeitungseinrichtung 1 am Ende eines bearbeiteten Feldstreifens nicht so lange warten muss, bis beispielsweise auch die letzte Maispflanze vom äußeren Rand des Vorsatzgerätes 2 zur Mitte des Vorsatzgerätes 2 geführt und dort in die Vorpreß- und Häckseleinheit 3 eingezogen worden ist. Der Bediener kann vielmehr stets weiterfahren, wobei nach Ablauf des Zeitintervalls zwangsgesteuert die Umkehr der Antriebsbewegung der Einzugs- und Fördereinrichtung 8,9 eingeleitet wird.

In vorteilhaften Ausführungsformen kann davon ausgegangen werden, dass die Koppelung zwischen der Antriebseinrichtung der Einzugs- und Fördereinrichtung 8,9 des Vorsatzgerätes 2 und einer Steuer- und Schaltvorrichtung der Verarbeitungsmaschine 1 (Häcksler) über mechanische, elektrische, hydraulische oder pneumatische Schaltelemente erfolgt. Es ist aber auch ohne weiteres denkbar, dass bei der Auswahl der Schaltelemente Kombinationen aus mechanisch/elektrisch oder hydraulisch/elektrisch oder pneumatisch/elektrisch ausgeführten Ausführungen bevorzugt werden. Weiterhin ist in diesem Zusammenhang auch ein Einsatz von Bordcomputern denkbar, so dass die Koppelung der Antriebseinrichtung der Einzugsund Fördereinrichtung 8,9 mit der Steuer- und Schaltvorrichtung der Verarbeitungsmaschine 1 über eine Verknüpfung von Programmabläufen (Software) erreicht wird.

Ein weiterer vorteilhafter Aspekt ergibt sich dadurch, dass die Zeitdauer T ebenfalls frei wählbar ist, in der die Einzugs- und Fördereinrichtung 8,9 des Vorsatzgerätes 2 mit einer, der Pfeilrichtung U1,U2 entgegengesetzten Richtung angetrieben wird. Dadurch erhält der Bediener eine Möglichkeit, die bei der Umkehr der Antriebsbewegung der Einzugs- und Fördereinrichtung 8,9 eintretende Reinigungswirkung dem Verschmutzungsgrad anzupassen.

In Weiterbildung der Erfindung ist es weiterhin vorstellbar, dass nach dem Ablauf der Zeitdauer T, in der die Einzugs- und Fördereinrichtung 8,9 mit einer, der Pfeilrichtung U1,U2 entgegengesetzten Richtung angetrieben worden ist, zwangsgesteuert eine Antriebsbewegung der Einzugs- und Fördereinrichtung 8,9 in Pfeilrichtung U1,U2 wiederherstellbar ist. Dies kann je nach Größe des Vorgewendes so geschehen, dass die Einzugs- und Fördereinrichtung 8,9 entweder mit einer reduzierten Umlaufgeschwindigkeit zur Minimierung von Verschleißerscheinungen an der Einzugs- und Fördereinrichtung 8,9 oder auch mit der beim Ernten notwendigen Umlaufgeschwindigkeit angetrieben wird.

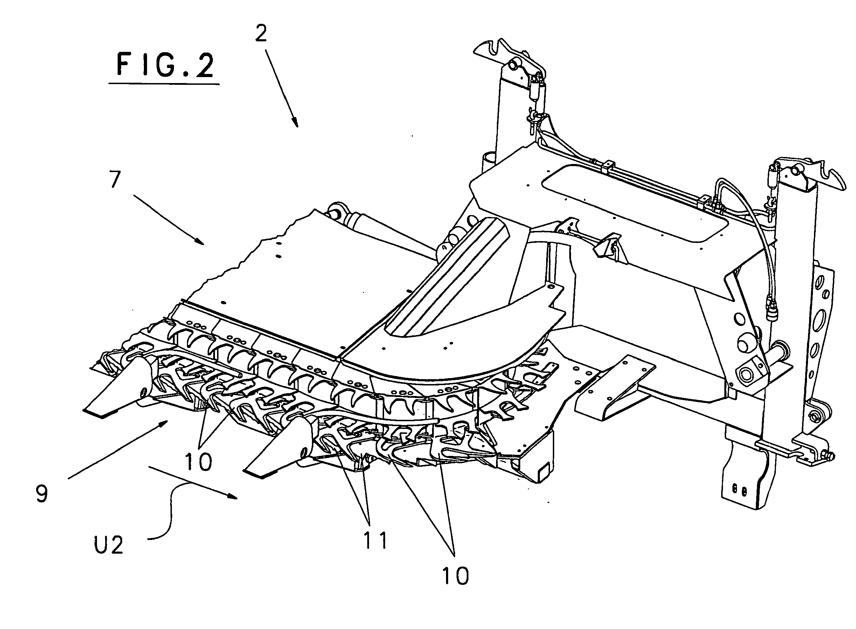

In Fig.2 ist in einer vergrößerten Darstellung ein Teil des Vorsatzgerätes wiedergegeben. In dieser Figur wird insbesondere verdeutlicht, in welcher Weise sich bei der Umkehr der Antriebsbewegung der Einzugs- und Fördereinrichtung 8,9 eine Reinigungswirkung einstellt. Durch den zeitlich begrenzten Antrieb der Einzugs- und Fördereinrichtung 8,9 in der Pfeilrichtung U1,U2 entgegengesetzter Richtung werden Maisblätter oder dgl. Pflanzenteile, welche sich beispielsweise an den hakenförmig ausgebildeten Förder- und Führungselementen 10 aufgehängt haben, in Zusammenwirkung mit feststehenden Bauteilen, wie z.B. unterhalb von der Einzugs- und Fördereinrichtung 8,9 angeordnete Schneidmesser 11 von den Förder- und Führungselementen 10 abgestreift und gelangen somit aus dem Einflussbereich der Einzugsund Fördereinrichtung 8,9.

## Patentansprüche

1. Erntegerät zum Ernten von Mais oder dgl. stengelartigem Erntegut, welches insbesondere als Vorsatzgerät (2) für eine mobile Verarbeitungseinrichtung (1) in der Art eines Häckslers oder dgl. ausgebildet ist, mit zumindest einer Einzugs- und Fördereinrichtung (8,9), die mittels auswärts weisender Förder- und Führungselemente (10) das stengelartige Emtegut in aufrechter Stellung erfasst, mäht und in Richtung der Verarbeitungseinrichtung (1) fördert, mit einer Aushubvorrichtung zur Überführung des Vorsatzgerätes (2) aus einer bodennahen Arbeits- und Betriebsstellung in eine zumindest teilweise ausgehobene Vorgewendestellung und mit einer Antriebseinrichtung zum umlaufenden und in Richtung (U1,U2) zur Verarbeitungseinrichtung (1) gerichteten Antrieb der Einzugs- und Fördereinrichtung (8,9), **dadurch gekennzeichnet, dass** die Antriebseinrichtung der Einzugs- und Fördereinrichtung (8,9), insbesondere die Steuerung der Antriebseinrichtung derartig mit einer Steuer- und Schaltvorrichtung der Verarbeitungseinrichtung (1) gekoppelt ist, dass mit dem Befehl zum Überführen des Vorsatzgerätes (2) aus einer bodennahen Arbeits- und Betriebsstellung in eine zumindest teilweise angehobene Vorgewendestellung zwangsgesteuert eine Umkehr der Antriebsbewegung der Einzugs- und Fördereinrichtung (8,9) eingeleitet wird.

2. Erntegerät nach Anspruch 1, **dadurch gekennzeichnet, dass** die Antriebseinrichtung der Einzugs- und Fördereinrichtung (8,9), insbesondere die Steuerung der Antriebseinrichtung derartig mit einer Steuer- und Schaltvorrichtung der Verarbeitungseinrichtung (1) gekoppelt ist, dass mit dem Befehl zum Überführen des Vorsatzgerätes (2) aus einer bodennahen Arbeits- und Betriebsstellung in eine zumindest teilweise angehobene Vorgewendestellung nach Ablauf eines Zeitintervalls Δt zwangsgesteuert eine Umkehr der Antriebsbewegung der Einzugs- und Fördereinrichtung (8,9) eingeleitet wird.

3. Erntegerät nach Anspruch 1 oder 2, **dadurch gekennzeichnet, dass** die Koppelung zwischen der Antriebseinrichtung der Einzugs- und Fördereinrichtung (8,9) und der Steuer- und Schaltvorrichtung der Verarbeitungseinrichtung (1) über mechanische und/oder elektrische und/oder hydraulische und/oder pneumatische Schaltelemente erreichbar ist.

4. Erntegerät nach Anspruch 1 oder 2, **dadurch gekennzeichnet, dass** die Koppelung zwischen der Antriebseinrichtung der Einzugs- und Fördereinrichtung (8,9) und der Steuer- und Schaltvorrichtung der Verarbeitungseinrichtung (1) über eine Verknüpfung von Programmabläufen der Antriebseinrichtung der Einzugs- und Fördereinrichtung (8,9) und der Steuer- und Schaltvorrichtung der Verarbeitungseinrichtung (1) erfolgt.

5. Erntegerät nach einem der Ansprüche 1 bis 4, **dadurch gekennzeichnet, dass** die Länge des Zeitintervalls Δt, welches zwischen dem Ausführen des Befehls zum Überführen des Vorsatzgerätes (2) aus einer bodennahen Arbeits- und Betriebsstellung in eine zumindest teilweise angehobene Vorgewendestellung und der Umkehr der Antriebsbewegung der Einzugs- und Fördereinrichtung (8,9) durchlaufen wird, individuell festlegbar ist.

6. Erntegerät nach einem der Ansprüche 1 bis 5, **dadurch gekennzeichnet, dass** die Zeitdauer T der Umkehrbewegung der Einzugs- und Fördereinrichtung (8,9) individuell wählbar ist.

7. Erntegerät nach einem der Ansprüche 1 bis 6, **dadurch gekennzeichnet, dass** nach dem Ablauf der Zeitdauer der Umkehrbewegung der Einzugs- und Fördereinrichtung (8,9) eine Antriebsbewegung der Einzugs- und Fördereinrichtung (8,9) in Richtung (U1,U2) zwangsgesteuert wiederherstellbar ist.

8. Erntegerät nach einem der Ansprüche 1 bis 7, **dadurch gekennzeichnet, dass** nach dem Ablauf der Zeitdauer der Umkehrbewegung der Einzugs- und Fördereinrichtung (8,9) eine Antriebsbewegung der Einzugs- und Fördereinrichtung (8,9) in Richtung (U1,U2) mit einer reduzierten Umlaufgeschwindigkeit zwangsgesteuert wiederherstellbar ist.

## Claims

1. Harvesting device for harvesting maize or the like stalked crops for harvesting, which harvesting device takes the form in particular of a front attachment (2) for a mobile processing means (1) of the chopper or the like type, said harvesting device having at least one intake and feeding means (8, 9) which, with the stalked crop for harvesting in the upright position, takes hold of the said stalked crop by means of outward-pointing feeding and guiding elements (10), cuts it and feeds it in the direction of the processing means (1), having a raising arrangement for transferring the front attachment (2) from a working and operating position close to the ground to an at least partly raised turning position, and having a drive means for driving the intake and feeding means (8, 9) in circulation in the direction (U1, U2) of the processing means (1), **characterised in that** the drive means of the intake and feeding means (8, 9), and in particular the control means of the drive means, is coupled to a control and switching arrangement of the processing means (1) in such a way that, at the command for the front attachment (2) to be transferred from a working and operating position close to the ground to an at least partly raised turning position, a reversal of the driven movement of the intake and feeding means (8, 9) is initiated by positive control.

2. Harvesting device according to claim 1, **characterised in that** the drive means of the intake and feeding means (8, 9), and in particular the control means of the drive means, is coupled to a control and switching arrangement of the processing means (1) in such a way that, at the command for the front attachment (2) to be transferred from a working and operating position close to the ground to an at least partly raised turning position, a reversal of the driven movement of the intake and feeding means (8, 9) is initiated by positive control on expiry of an interval of time Δt.

3. Harvesting device according to claim 1 or 2, **characterised in that** the coupling between the drive means of the intake and feeding means (8, 9) and the control and switching arrangement of the processing means (1) can be achieved by means of mechanical and/or electrical and/or hydraulic and/or pneumatic switching elements.

4. Harvesting device according to claim 1 or 2, **characterised in that** the coupling between the drive means of the intake and feeding means (8, 9) and the control and switching arrangement of the processing means (1) is effected by logic interlinking of programmed operations performed by the drive means of the intake and feeding means (8, 9) and by the control and switching arrangement of the processing means (1).

5. Harvesting device according to one of claims 1 to 4, **characterised in that** the length of the interval of time Δt which elapses between the execution of the command for the front attachment (2) to be transferred from a working and operating position close to the ground to an at least partly raised turning position and the reversal of the driven movement of the intake and feeding means (8, 9) can be individually set.

6. Harvesting device according to one of claims 1 to 5, **characterised in that** the duration T of the movement of the intake and feeding means (8, 9) in reverse can be individually selected.

7. Harvesting device according to one of claims 1 to 6, **characterised in that**, on expiry of the duration of the movement of the intake and feeding means (8, 9) in reverse, the intake and feeding means (8, 9) can be restored by positive control to a driven movement in the direction (U1, U2).

8. Harvesting device according to one of claims 1 to 7, **characterised in that**, on expiry of the duration of the movement of the intake and feeding means (8, 9) in reverse, the intake and feeding means (8, 9) can be restored by positive control to a driven movement at a reduced speed of circulation in the direction (U1, U2).

## Revendications

1. Récolteuse de maïs ou produits de récolte en forme de tiges, analogues, ayant notamment une machine avant (2) pour une installation de traitement mobile (1) de type ensileuse ou analogue,
au moins une installation de transfert et de prise (8, 9) qui prend le produit en forme de tiges, en position debout, à l'aide d'éléments de transfert et de guidage (10) dirigés vers l'extérieur, coupe et transfère en direction de l'installation de traitement (1),
un dispositif de dégagement pour faire passer l'appareil avant (2) d'une position de travail et de fonctionnement proche du sol dans une position au moins partiellement relevée et
un entraînement pour entraîner l'installation de transfert et de prise (8, 9) en rotation et dans la direction (U1, U2) de l'installation de traitement (1),
**caractérisée en ce que**
l'entraînement de l'installation de transfert et de prise (8, 9) et en particulier la commande de l'entraînement sont couplées au dispositif de commande et de commutation de l'installation de traitement (1) pour que la commande faisant passer la machine avant (2) d'une position de travail et de fonctionnement proche du sol dans une position de pré-retournement, partiellement relevée, produit de force l'inversion du mouvement d'entraînement de l'installation de transfert et de prise (8, 9).

2. Récolteuse selon la revendication 1,
**caractérisée en ce que**
l'entraînement de l'installation de transfert et de prise (8, 9) et en particulier la commande de l'entraînement est couplée au dispositif de commande et dé commutation de l'installation de traitement (1) de façon que la commande de faire passer la machine avant (2) d'une position de travail et de fonctionnement proche du sol dans une position préalable au retournement, au moins partiellement relevée, à la fin d'un intervalle de temps (Δt), oblige de force, l'inversion du mouvement d'entraînement de l'installation de transfert et de prise (8, 9).

3. Récolteuse selon la revendication 1 ou 2,
**caractérisée en ce que**
le couplage entre l'entraînement de l'installation de transfert et de prise (8, 9) et le dispositif de commande et de commutation de l'installation de traitement (1) est fait par des éléments de commutation mécaniques et/ou électriques et/ou hydrauliques et/ou pneumatiques.

4. Récolteuse selon les revendications 1 ou 2,
**caractérisée en ce que**
le couplage entre l'entraînement de l'installation de transfert et de prise (8, 9) et le dispositif de commande et de commutation de l'installation de traitement (1) se fait par une combinaison d'exécutions de programme de l'entraînement de l'installation de transfert et de prise (8, 9) et du dispositif de commande et de commutation de l'installation de traitement (1).

5. Récolteuse selon l'une des revendications 1 à 4,
**caractérisée en ce que**
la durée de l'intervalle de temps (Δt) entre l'exécution de l'ordre et le passage de la machine avant (2) d'une position de travail et de fonctionnement proche du sol dans une position préalable au retournement, au moins partiellement relevée et l'inversion du mouvement d'entraînement de l'installation de transfert et de prise (8, 9), se fixe de manière individuelle.

6. Récolteuse selon l'une des revendications 1 à 5,
**caractérisée en ce que**
la durée (T) du mouvement d'inversion de l'installation de transfert et de prise (8, 9) se choisit de manière individuelle.

7. Récolteuse selon l'une des revendications 1 à 6,
**caractérisée en ce qu'**
après la fin de la durée du mouvement d'inversion de l'installation de transfert et de prise (8, 9), on rétablit de nouveau le mouvement d'entraînement de l'installation de transfert et de prise (8, 9) dans la direction (U1, U2) par une commande forcée.

8. Récolteuse selon l'une des revendications 1 à 7,
**caractérisée en ce qu'**
après la fin de la durée du mouvement d'inversion de l'installation de transfert et de prise (8, 9), on rétablit par une commande forcée le mouvement d'entraînement de l'installation de transfert et de prise (8, 9) dans la direction (U1, U2) à vitesse de circulation, réduite.
